Europäisches Patentamt

European Patent Office

Office européen des brevets

(19)

(11) **EP 0 954 618 B1**

(12) **EUROPÄISCHE PATENTSCHRIFT**

(45) Veröffentlichungstag und Bekanntmachung des Hinweises auf die Patenterteilung:
**29.09.2004  Patentblatt 2004/40**

(51) Int Cl.⁷: **C22F 1/00**, G06F 17/10, G06T 11/20

(21) Anmeldenummer: **94902635.5**

(22) Anmeldetag: **23.12.1993**

(86) Internationale Anmeldenummer:
**PCT/DE1993/001252**

(87) Internationale Veröffentlichungsnummer:
**WO 1994/015267 (07.07.1994 Gazette 1994/15)**

(54) **VERFAHREN ZUR GENERIERUNG VON EBENEN TECHNISCHEN KURVEN ODER KONTUREN**

PROCESS FOR GENERATING PLANE TECHNICAL CURVES OR CONTOURS

METHODE DE GENERATION DES PLANSTECHNIQUES COURBES OU CONTOURS

(84) Benannte Vertragsstaaten:
**CH DE FR GB LI**

(30) Priorität: **24.12.1992  DE 42444624 F**

(43) Veröffentlichungstag der Anmeldung:
**10.11.1999  Patentblatt 1999/45**

(73) Patentinhaber: **SCHULMEISS, Treugott**
**D-07747 Jena (DE)**

(72) Erfinder: **SCHULMEISS, Treugott**
**D-07747 Jena (DE)**

(74) Vertreter: **Kietzmann, Manfred et al**
**Eckner Roloff Nitschke & Kollegen,**
**Rechtsanwälte,**
**Patentanwälte,**
**Brückenstrasse 14**
**10179 Berlin (DE)**

(56) Entgegenhaltungen:
**EP-A- 0 568 360**

- **COMPUTER VISION GRAPHICS AND IMAGE PROCESSING Bd. 42, Nr. 1, April 1988, DULUTH, MA US Seiten 32 - 47 XP000000262 N.KEHTARNAVAZ ET AL 'A FRAMEWORK FOR SURFACE RECONSTRUCTION FROM 3D CONTOURS'**
- **COMPUTER AIDED DESIGN Bd. 24, Nr. 11, November 1992, LONDON GB Seiten 611 - 618 XP000328796 J.HOSCEK 'CIRCULAR SPLINES'**
- **IEEE COMPUTER GRAPHICS AND APPLICATIONS Bd. 9, Nr. 3, Mai 1989, NEW YORK US Seiten 56 - 69 XP000115871 XIAOLIN WU ET AL 'DOUBLE-STEP GENERATION OF ELLIPSES'**
- **ACM TRANSACTION ON GRAPHICS Bd. 11, Nr. 3, Juli 1992 Seiten 259 - 275 XP000306276 M DOUGLAS MCILROY 'GETTING RASTER ELLIPSES RIGHT'**
- **FOLEY ET AL 'COMPUTER GRAPHICS - PRINCIPLES AND PRACTICE' 1990, ADDISON WESLEY PUBLISHERS, READING MASSACHUSETTS US siehe Seite 501, Zeile 1 - Seite 516, Zeile 25**

**Beschreibung**

Die Erfindung bezieht sich auf ein Verfahren zur Generierung von ebenen technischen Kurven oder Konturen für technische Geräte, in denen ebene gekrümmte geometrische Objekte in besonders großem Umfang, in sehr hoher Auflösung und/oder unter Realtime-Anforderungen dargestellt oder generiert werden müssen. Die erfindungsgemäße Lösung ermöglicht die schnelle und exakte Generierung digitaler Approximationen für spezielle ebene Kurven im Bereich der grafischen Datenverarbeitung. Die betrachteten Splines werden in grafischen Entwurfssystemen eingesetzt als effiziente und flexible Mittel zur Beschreibung gekrümmter linienhafter und flächenhafter geometrischer Objekte und zur angenäherten Beschreibung mathematisch komplizierterer Kurven. Digitale Approximationen (Diskretisierungen) der Splines werden benötigt für die grafische Darstellung der durch Splines beschriebenen Objekte in einem quadratischen Raster sowie zur Ansteuerung von technischen Geräten, die durch Splines beschriebene Objekte in einem quadratischen Raster belichten oder in anderer Form zur Generierung von Kurven, Konturen oder Flächen umsetzen. Derartige Anwendungen sind etwa Laserbelichter (Drucker, Plotter etc.), Mikrolithografie mit Elektronen- oder Röntgenstrahlen, Mikrosystemtechnik, binäre und integrierte Optik, Herstellung von Lichtwellenleitern, 2-D-Robotersteuerungen, Drucktechnik und die Visualisierung von Entwurfsdaten.

Grafische Entwurfssysteme sind in vielen technischen Bereichen ein unabdingbares Werkzeug zur Produktentwicklung und zur Erzeugung von Fertigungsdaten. Auf klassischen Gebieten wie Maschinen-, Automobil-, Schiff- und Flugzeugbau oder zur Entwicklung mikroelektronischer Schaltkreise existieren leistungsfähige, komplexe, z.T. hochautomatisierte Entwurfssysteme. Für sie ist kennzeichnend, daß sie zur Modellierung von gekrümmten ebenen oder räumlichen Kurven und Flächen Splines verwenden, bevorzugt parametrische kubische Splines.

Splines verbinden die Vorteile von Flexibilität und Universalität als Entwurfshilfsmittel mit einfacher rechentechnischer Handhabbarkeit und geringem Datenaufwand zur Beschreibung auch komplizierterer Objekte. Während bis vor wenigen Jahren ausschließlich polynomiale Splines eingesetzt wurden, bieten jetzt rationale Splines größeren Entwurfsspielraum bei nur unwesentlich gesteigertem Rechenaufwand und finden Aufnahme sowohl in neueren Entwurfssystemen als auch als geometrische Primitive in Standards der Computergrafik. Ein weiterer Vorteil rationaler Splines besteht darin, daß sie quadratische Kurven (Kreisbögen, Ellipsen, Parabeln, Hyperbeln) exakt darstellen.

Zur Visualisierung der Entwurfsergebnisse und zur Ansteuerung technischer Geräte, die die Entwürfe in industrielle Produkte umsetzen, werden in der Regel koordinatengesteuerte Einrichtungen mit einer maximalen diskreten Koordinatenauflösung verwendet. Daher konnen nur Punkte eines quadratischen Rasters codiert und angesteuert werden, und es entsteht die Aufgabe, digitale Approximationen für durch Splines beschriebene Kurven und Konturen zu generieren. Dies ist sowohl ein rechenzeitaufwendiger als auch ein vom Ergebnis her datenintensiver Vorgang.

Mit der Entwicklung der Mikrostrukturtechnik treten technische Anwendungen auf, für die es noch keine spezialisierten grafischen Entwurfssysteme gibt und die an die Digitalisierung erhöhte Anforderungen stellen. Bei wesentlich gesteigerter Auflösung wachsen die zu erzeugenden Rasterpunktmengen und damit die notwendigen Rechenzeiten stark an. Es werden Entwürfe notwendig, bei denen eine vollständige Digitalisierung auf unvertretbar hohe Datenmengen führen würde, bei denen daher die Digitalisierung parallel zum technischen Steuervorgang und somit unter Echtzeitbedingungen erfolgen muß. Die Anforderungen an die Genauigkeit der erzeugten Konturen wachsen.

Insgesamt ist der Stand der Entwurfstechnik auf diesem und ähnlichen Gebieten dadurch gekennzeichnet, daß die Probleme der Digitalisierung kubischer Splines deren Einsatz zur Modellierung gekrümmter geometrischer Objekte bisher behinderten. Statt dessen werden Kreis- oder Ellipsenbögen verwendet, für deren exakte Digitalisierung schnelle und einfache Verfahren existieren, oder kompliziertere Bögen werden durch (datenaufwendige und ungenaue) Polygonzüge angenähert. In manchen Systemen wird die erforderliche Rechenzeit dadurch gesenkt, daß ausschließlich polynomiale quadratische Splines genutzt werden können.

Zweckmäßigerweise können verschiedene gebräuchliche Klassen von Splines zur Digitalisierung durch einfache Transformationen in Bezierkurven überführt werden. Nach dem Stand der Technik werden zur Berechnung einzelner Kurvenpunkte einer Bezierkurve *(x(t), y(t))* der Algorithmus von de Casteljau oder ein dem Horner-Schema verwandtes Verfahren eingesetzt [G. Farin: Curves and Surfaces for CAGD, Academic Press 1990]. Die digitale Approximation einer Kurve wird zusammengesetzt aus den digitalen Approximationen der zwischen berechneten Kurvenpunkten liegenden Strecken.

Dieses Verfahren weist drei Nachteile auf, die insbesondere bei Anwendungen in innovativen technischen Bereichen von Bedeutung sind:

1. Anzahl und Zeitbedarf der Rechenschritte zur Berechnung eines Kurvenpunktes sind relativ hoch, speziell bei rationalen (nichtpolynomialen) Splines.

2. Die Schrittweite des Parameters *t,* mit der einzelne Kurvenpunkte berechnet werden, muß in Bereichen großer Krümmung oder starker Koordinatenänderung einer Kurve feiner gewählt werden als in anderen Bereichen. Diese Adaptierung erfordert zusätzlichen Aufwand. Verzichtet man darauf, treten entweder Effizienzverluste oder Genauigkeitsverluste ein.

3. Es kann nicht garantiert werden, daß jeder erzeugte Rasterpunkt einen Abstand parallel zu den Koordinatenachsen kleiner oder gleich der halben Rasterschrittweite von der exakten Splinekurve hat, auch nicht bei extrem feiner Schrittweite des Parameters t. Ein exaktes Verfahren kann diesen Maximalfehler garantieren.

Eine rekursive Anwendung des Algorithmus von de Casteljau, die den dritten Nachteil vermeidet, wurde in [D.E.Knuth: Computers & Typesetting; D, Addison Wesley 1986] angegeben. Sie ist allerdings sehr rechenzeitaufwendig, da in ungünstigen Fällen die Anzahl der auf komplizierte Weise zu berechnenden Kurvenpunkte vergleichbar mit der Anzahl der zu erzeugenden Rasterpunkte ist.

In der Veröffentlichung [Knuth] wurde auch die sog. Oktantenteilung beschrieben. Sie vereinfacht das Verfahren zur Generierung eines Splinebogens, indem sie eine Splinekurve in Abschnitte unterteilt - an den Maxima und Minima von x(t) bzw. *y(t)* sowie an denjenigen Punkten, in denen der Anstieg der Tangente an die Kurve +1 oder -1 beträgt. Die Generierung der einzelnen Abschnitte wird dann auf die Generierung eines Bogens in Standardlage zurückgeführt. Diese Verfahrensweise wird in der hier vorgeschlagenen Neuerung übernommen, allerdings wird zur Generierung nicht von der parametrischen Bezierkurve ausgegangen, sondern diese wird hierzu in eine implizite kubische Kurve $f(x,y) = 0$ mit einem kubischen Polynom *f* transformiert.

In dem in U.S. Patent 4,789,954 beschriebenen ähnlichen Verfahren zur digitalen Approximation einer impliziten quadratischen Kurve $F(x,y) = 0$ wird dagegen bei der Generierung jedes einzelnen Rasterpunktes überprüft, ob in der Kurvenverfolgung ein Oktantenwechsel und damit eine Änderung der Rechenvorschrift erforderlich ist. Die dafür notwendigen Rechenschritte werden im hier vorgeschlagenen Verfahren außerhalb der Schleife zur Bogengenerierung und nur einmalig durchgeführt, wodurch sich die angestrebte Generierung von Bögen in hoher Auflösung erheblich beschleunigt.

Der Stand der Technik bei der Generierung zweidimensionaler Kurven wird auch in dem Artikel (IEEE Computer Graphics and Applications, Bd. 9, Nr. 3, Mai 1989, Seiten 56-69, Xiaolin Wu et al "Double-Step Generation of Ellipses") deutlich. Darin wird ein zweistufiges Verfahren der inkrementellen Digitalisierung von nichtparametrischen (also in impliziter Form) definierten Ellipsen beschrieben. Dabei wird gleichzeitig das Prinzip der Oktantenteilung verwendet, und darüber hinaus zum Zwecke der Beschleunigung des Verfahrens eine nochmalige Unterteilung der Bögen in sogenannte Hexatanten (insgesamt 16 Segmente) eingeführt. Das im angegebenen Artikel vorgeschlagene Verfahren ist ausschliesslich auf Ellipsen und damit nur auf Kurven zweiter Ordnung ausgerichtet und es bezieht sich nicht aufparametrisch definierte Kurven.

Das im obengenannten Patent beschrieben Verfahren ist in der Lage, eine quadratische Kurve in einem Zug zu erzeugen, da ein Oktantenwechsel automatisch erkannt und in den Ablauf integriert wird. Um die Rechenoperationen dabei einfach zu halten, wird dieser Vorteil jedoch mit dem Nachteil erkauft, daß der Approximationsfehler eines generierten Rasterpunktes einen ganzen Rasterschritt, also das Zweifache des garantierbaren Maximalfehlers betragen kann.

Der im Patentanspruch 1 angegebenen Erfindung liegt das Problem zugrunde, ein Verfahren zur Generierung von ebenen technischen Kurven oder Konturen in einem technischen Gerät anzugeben, welches die Ansteuerung von Punkten in einem quadratischen Raster ermöglicht, das mittels Digitalisierung von parametrischen polynomialen und rationalen kubischen Bezierkurven in der x-y-Ebene aufeinanderfolgende Rasterpunkte mit möglichst wenigen einfachen Rechenoperationen erzeugt. Darüber hinaus soll es den kleinstmöglichen Fehler der erzeugten Rasterpunkte garantieren und die Probleme der passenden Schrittweitenwahl bei der Berechnung von Kurvenpunkten vermeiden. Weiterhin soll das vorgeschlagene Verfahren den Rechenaufwand zur Vorbereitung der Generierung einzelner Bögen möglichst gering halten.

Diese Problem wird dadurch gelöst, daß zur Digitalisierung parametrischer, rationaler oder polynomialer kubischer Bezierkurven der Form

$$X(t) = \frac{X_0 \, (1-t)^3 + 3\, p\, X_1\, t(1-t)^2 + 3\, q\, X_2\, t^2\, (1-t) + X_3\, t^3}{(1-t)^3 - 3\, p\, t(1-t)^2 - 3\, q\, t^2\, (1-t) + t^3} \quad (0 <= t <= 1)$$

mit den Kontrollpunkten $X_i = (x_i,\ y_i)\ (0 <= i <= 3)$,
den Gewichten $p,\ q > 0$,
und dem Parameter $t$ mit $0 <= t <= 1$
diese in Oktantenbögen, die getrennt erzeugt werden, zerlegt werden, derart, daß die Grenzen der Oktantenbögen durch die Parameter t an den Punkten der Kurve bestimmt werden, wo diese den Anstieg 0, ∞ , 1 oder -1 aufweist, daß anschließend die Kurven zur Befreiung von der Parametrisierung in eine implizite Form f(x, y) = 0 transformiert werden, daß eine zusätzliche Kurventeilung der Bezierkurve an den Stellen erfolgt, an denen f(x, y) = 0 eine Selbstüberschneidung besitzt und danach eine Bestimmung der Koordinaten aller Teilungspunkte aus den entsprechenden Parameterwerten erfolgt, wobei die Teilungspunkte zusammen mit den Anfangs- und Endpunkten der ursprünglichen Kurve die Anfangs- und Endpunkte aller Einzelbögen bilden, daß alle diese Bögen durch Spiegelungen an einer oder mehreren der drei Achsen x = 0, y = 0 oder x = y in die Standardlage gebracht werden die dadurch bestimmt ist, dass der Richtungsvektor (dx,dy) vom Anfangspunkt eines Bogens zu dessen Endpunkt Komponenten dx > = 0 und dy > = 0 besitzt sowie dass dx > = dy gilt daß die Generierung der digitalen Approximation mit der Bestimmung des zum Startpunkt des Bogens benachbarten Rasterpunktes $(x_o, y_o)$ beginnt, wobei durch die Oktantenteilung und die Spiegelungen gesichert ist, daß der Anstieg des Bogens stets zwischen 0 und 1 liegt, daß anschließend die Berechnung der Funktion $f(x_o + 1, y_o + \frac{1}{2})$ erfolgt, wobei diese Berechnung und die Auswertung des Vorzeichens von f im Testpunkt $(x_o + 1, y_o + \frac{1}{2})$ die Entscheidung ermöglicht, zwischen welchem der Rasterpunkte $(x_0+1,y_0)$ bzw. $(x_0+1,y_0+1)$ und dem Testpunkt der Bogen verläuft und daß anschließend dieser Rasterpunkt den Ausgangspunkt für den nächsten Schritt bis zum Erreichen des Endpunktes des Bogens bildet, und das technische Gerät die so erzeugten Rasterpunkte ansteuert.

Ausgangspunkt des erfindungsgemäßen Verfahrens ist die Standardform einer rationalen kubischen Bezierkurve

$$\frac{X_0\ (1\text{-}t)^3 + 3\,p\ X_1\ t(1\text{-}t)^2 + 3\,q\ X_2\ t^2\ (1\text{-}t) + X_3\ t^3}{(1\text{-}t)^3 - 3\,p\ t(1\text{-}t)^2 + 3\,q\ t^2\ (1\text{-}t) - t^3}$$

mit den Kontrollpunkten     $X_i = (x_i, y_i)\ (0 < = i < = 3),$
den Gewichten     $p, q > 0,$
und dem Parameter     $t\ mit\ 0 < = t < = 1.$

Falls $p = q = 1$, wird das Nennerpolynom identisch 1 und die Bezierkurve ist polynomial. Von der Standardform abweichende Bezierkurven, bei denen die Kontrollpunkte $X_0$ oder $X_3$ mit von 1 verschiedenen Gewichten versehen sind, können durch eine einfache Parametertransformation in die Standardform überführt werden.

Für die schnelle Generierung der Rasterpunkte ist es erforderlich, die Kurve in sogenannte Oktantenbögen zu zerlegen und diese getrennt zu erzeugen. Dazu werden diejenigen Parameterwerte $t$ ermittelt, bei denen die Kurve eine waagerechte oder senkrechte Tangente besitzt bzw. eine Tangente mit dem Anstieg +1 oder -1. Das geschieht durch die Lösung von 4 Polynomgleichungen 4. Grades, die im Parameterintervall *[0,1]* jeweils höchstens zwei Lösungen besitzen. Im vorgeschlagenen Verfahren werden die Polynome 4. Grades als Bezierfunktionen dargestellt und durch ein schnelles geometrisches Verfahren rekursiv ihre Nullstellen bestimmt.

Von der Parametrisierung befreit man sich durch den Übergang zu einer parameterlosen impliziten Form $f(x, y) = 0$ mit einem in $x$ und $y$ kubischen Polynom $f$. Die Bezout-Resultante, eine dreireihige Determinante, deren Elemente lineare Polynome in $x$ und $y$ sind, liefert diese Darstellung. Aus ihr lassen sich die Koeffizienten von $f$ leicht gewinnen, indem passend gewählte Koordinatenpaare in die Kurvengleichung eingesetzt werden und das entstehende homogene lineare Gleichungssystem gelöst wird.

Die implizite Kurvengleichung setzt die gegebene Bezierkurve in der ganzen *x-y*-Ebene fort. Aus algorithmischen Gründen muß eine zusätzliche Kurventeilung an den Stellen der Bezierkurve erfolgen, an denen $f = 0$ eine Selbstüberschneidung besitzt, auch wenn die ursprüngliche Bezierkurve diese nicht aufweist. Die zugehörigen Parameterwerte werden aus der Bezierform problemlos über das Lösen einer quadratischen Gleichung berechnet.

Aus den Parameterwerten aller Teilungspunkte werden die Koordinaten der Teilungspunkte bestimmt. Sie bilden zusammen mit dem Anfangs- und Endpunkt der ursprünglichen Kurve die Anfangs- und Endpunkte aller Einzelbögen. Jeder dieser Bögen wird durch eine Auswahl aus den drei Transformationen Spiegelung an der Geraden *x = 0,* an der Geraden *y = 0* und an der Geraden *x = y* in die Standardlage gebracht. Sie ist dadurch gekennzeichnet, daß der Richtungsvektor *(dx, dy)* vom Anfangspunkt des Bogens zum Endpunkt positive Koordinaten besitzt und daß *dx >= dy*. Durch eine eventuelle Negation des transformierten Polynoms f wird gewährleistet, daß Punkte unterhalb des Bogens beim Einsetzen in die Kurvengleichung positive Werte liefern.

Die Generierung der digitalen Approximation beginnt mit der Bestimmung des zum Startpunkt des Bogens benachbarten Rasterpunktes $(x_0, y_0)$. Durch die Oktantenteilung und die durchgeführte Transformation ist gesichert, daß der Anstieg des Bogens an jeder Stelle zwischen 0 und 1 liegt. Damit kommen zum Abszissenwert $x_0 - 1$ nur die Punkte $(x_0 + 1, y_0)$ und $(x_0 + 1, y_0 - 1)$ als Rasterpunkte mit minimalem Abstand zur Kurve in Frage. Die Berechnung von $f(x_0 + 1, y_0 + 1/2)$ und die Auswertung des Vorzeichens von $f$ in diesem Testpunkt erlaubt die Entscheidung, zwischen welchem Rasterpunkt und dem Testpunkt der Bogen verläuft. Dieser Rasterpunkt ist nun Ausgangspunkt für den nächsten Schritt usw. bis der Endpunkt des Bogens erreicht ist.

Zusätzlich zu dem Funktionswert im Testpunkt sind 2 Korrekturwerte erster Ordnung für den Funktionswert und drei Korrekturwerte zweiter Ordnung für die Korrekturen erster Ordnung zu berechnen. Zusammen mit vier konstanten Korrekturwerten dritter Ordnung ermöglichen sie es, alle verwendeten Parameter durch lediglich 6 Additionen je nach der getroffenen Entscheidung für den Übergang zum nächsten Testpunkt inkrementell zu aktualisieren.

Durch die Entscheidungen, wann in dem digitalisierten Bogen jeweils nur eine Koordinate oder beide gleichzeitig zu inkrementieren sind, wird die digitale Approximation vollständig beschrieben. Für die Weiterverarbeitung der Daten ist lediglich eine Rücktransformation des Bogenanfangspunktes und eine Uminterpretation der Koordinatenschritte notwendig.

### Detaillierte Beschreibung des Verfahrens

### 1. Bestimmung der Parameterwerte zur Oktantenteilung

Es sei eine ebene kubische rationale Bezierkurve in Standardform

$$X(t) = \frac{X_0\,(1\text{-}t)^3 + 3\,p\,X_1\,t(1\text{-}t)^2 + 3\,q\,X_2\,t^2\,(1\text{-}t) + X_3\,t^3}{(1\text{-}t)^3 - 3\,p\,t(1\text{-}t)^2 - 3\,q\,t^2\,(1\text{-}t) - t^3}\ (0 <= t <= 1)$$

zu digitalisieren. Beim Durchlauf durch die Kurve für wachsende Parameterwerte $t$ kann sich in Analogie zum Durchlauf eines Kreisbogens in der Regel mehrfach der durchlaufene Oktant des Tangentialvektors $(x'(t), y'(t))$ an die Kurve ändern. Zwischen den Wechseln, innerhalb eines sogenannten Oktantenbogens, besitzt die digitalisierte Kurve eine eindeutige Fortschreitrichtung (x- oder y-Richtung), einen bestimmten Durchlaufsinn (in Richtung wachsender oder fallender Koordinaten), und die Zuwächse von Rasterpunkt zu Rasterpunkt orthogonal zur Fortschreitrichtung besitzen ein festes Vorzeichen (positiv oder negativ). Die 8 Oktanten können folgendermaßen charakterisiert werden:

| Oktant | Fortschreitrichtung | Durchlaufsinn | orthogonales Inkrement |
|:------:|:-------------------:|:-------------:|:----------------------:|
| 1 | y | - | + 1 |
| 2 | y | - | - 1 |
| 3 | x | - | - 1 |
| 4 | x | - | + 1 |
| 5 | y | + | - 1 |
| 6 | y | + | + 1 |
| 7 | x | + | + 1 |
| 8 | x | + | - 1 |
| (vgl. Abb. 1). | | | |

Die Oktantenwechsel treten auf an den Stellen $t$ mit $x'(t) = 0$, $y'(t) = 0$ und $x'(t) = y'(t)$ bzw. $x'(t) = -\,y'(t)$, an denen die Kurve Extremwerte in $x$ oder $y$ oder den Anstieg $+1$ bzw. $-1$ besitzt.

Jede der Funktionen $x'(t)$, $y'(t)$, $(x(t)-y(t))'$ und $(x(t)+y(t))'$ hat ausgehend von den rationalen Koordinatenglei-chungen die Form

$$\frac{u'v - uv'}{v^2}$$

wobei

$$u(t) = a_0\,(1\text{-}t)^3 + 3a_1\,p\,t(1\text{-}t)^2 + 3a_2\,q\,t^2\,(1\text{-}t) + a_3\,t^3$$

eine kubische Bezierfunktion und $v(t)$ den Nenner der Gleichung der ursprünglichen Bezierkurve bezeichnet.

Die Nullstellen einer derartigen Funktion sind aus den Nullstellen des Zählers bestimmbar. Der Nenner ist wegen $p, q > 0$ stets größer Null. Der Zähler einer Ableitungsfunktion ist formal ein Polynom 5. Grades, da jedoch der Koeffizient von $t^5$ unabhängig von der Wahl der Ordinaten $a_i$ und der Gewichte $p, q$ identisch verschwindet, ist lediglich eine Gleichung 4. Grades zu lösen. Man kann voraussetzen, daß die betrachteten Gleichungen im Intervall $[0,1]$ maximal 2 Lösungen besitzen, da eine rationale Bezierkurve auf ihrem Parameterintervall keinen qualitativ anderen Verlauf hat als die entsprechende polynomiale mit den Gewichten $p = q = 1$, bei der unter den getroffenen Voraussetzungen die Ableitungen nach $t$ quadratische Polynome sind.

Für eine schnelle Lösung der Gleichung $u'v - uv' = 0$ im Intervall $[0,1]$ wird ihre linke Seite als eine polynomiale Bezierfunktion vom Grad 4

$$B(b_0,b_1,b_2,b_3,b_4;t) = b_0\ (1\text{-}t)^4 + 4\ b_1\ t(1\text{-}t)^3 + 6\ b_2\ t^2(1\text{-}t)^2 + 4\ b_3\ t^3\ (1\text{-}t) + b_4\ t^4$$

dargestellt. Dabei gelten (bis auf einen konstanten Faktor) folgende Formeln

$$b_0 = 2\ p\ (a_1 - a_0),$$

$$b_1 = q(a_2 - a_0),$$

$$b_2 = (a_3 - a_0)/3 + pq(a_2 - a_1),$$

$$b_3 = p\ (a_3 - a_1),$$

$$b_4 = 2\ q\ (a_3 - a_2).$$

Zusätzlich zu dem Ordinatenvektor der Bezierfunktion werden zwei weitere Variablen eingeführt und initialisiert - der Anfangspunkt $s = 0$ ihres Parameterintervalls und die Intervallänge $l = 1$.

Das Verfahren zur Nullstellenbestimmung besteht aus mehreren Schritten:

1. Abtrennen einer auf dem Rand des Parameterintervalls liegenden Nullstelle,
2. Separieren der Nullstellen und Eingrenzen einer separierten Nullstelle durch sukzessive Halbierung des Parameterintervalls,
3. schnelles Eingrenzen einer Nullstelle, sobald die Bezierfunktion auf dem verkleinerten Parameterintervall keinen Wendepunkt besitzt.
4. Das schnelle Eingrenzen einer separierten Nullstelle kann auch nach einer prinzipiell anderen Methode erfolgen, und zwar durch die alternierende Anwendung von Schmiegungsparabeln am linken und rechten Rand des Parameterintervalls.

**zu 1**.:Eine auf dem Rand des Parameterintervalls liegende Nullstelle ist daran erkennbar, daß $b_0 = 0$ (Nullstelle für $t = 0$ ) oder $b_4 = 0$ (Nullstelle für $t = 1$). Die folgenden Transformationen der Bezierfunktion $B(b_0,b_1,b_2,b_3,b_4;t)$ zu $B(c_0,c_1,c_2,c_3,c_4;t)$ stellen ein Polynom mit einem um 1 verringerten Grad her, das alle ursprünglichen Nullstellen außer der am Rand liegenden aufweist:

Falls $b_0 = 0$,    $c_0 = 4\ b_1$,
                     $c_1 = b_1 + 3\ b_2\ /\ 2$,
                     $c_2 = b_2 + 2\ b_3\ /\ 3$,
                     $c_3 = b_3 + b_4\ /\ 4,\ c_4 = b_4$.

Falls $b_4 = 0$,    $c_0 = b_0$,
                     $c_1 = b_1 + b_0\ /\ 4$,
                     $c_2 = b_2 + 2\ b_1\ /\ 3$,
                     $c_3 = b_3 + 3\ b_2\ /\ 2$,
                     $c_4 = 4\ b_3$.

**zu 2.** :Das vorgeschlagene Verfahren zur Berechnung der Nullstellen liefert eine obere und eine untere Schranke für jede der Nullstellen im Parameterintervall *[0,1]*. Die Differenz beider Schranken kann kleiner als ein vorgegebener Fehler *delta* gemacht werden, so daß die zu den Mittelwerten der Schranken berechneten Kurvenpunkte im vorgegebenen Raster hinreichend nahe an den Trennstellen der Oktantenbögen liegen. Das Verfahren beginnt mit einer sukzessiven Halbierung des Parameterintervalls.

Der Algorithmus von de Casteljau erlaubt es, eine polynomiale Bezierfunktion $B(a_0,...,a_n;t)$ an der Stelle $t = t_0$ aufzutrennen und in zwei Bezier-Segmente $B_1(\ b_0,\ ...,\ b_n;\ t)$ und $B_2(\ c_0,\ ...,\ c_n;\ t)$ zu zerlegen. Dabei gilt

$$B_1(b_0, ..., b_n; t) = B(a_0, ..., a_n; t_0 * t),$$

$$B_2(c_0, ..., c_n; t) = B(a_0, ..., a_n; t_0 + (1-t_0) * t)$$

für $0 < = t < = 1$.

Die abgeleiteten Segmente $B_1$ und $B_2$ stellen die beiden Teile der Bezierfunktion B wieder als Bezierfunktionen über $[0, 1]$ dar. Deshalb ist es notwendig, in den Variablen $s$ (Startpunkt) und $l$ (Länge) mitzuführen, welchem Abschnitt des Parameterintervalls der Ausgangsfunktion jeweils ein Segment entspricht.

Die Startpunkte und die Intervallängen der abgetrennten Segmente werden gemäß

$$s(B_1) = s(B), \qquad l(B_1) = t_0 * l(B),$$

$$s(B_2) = s(B) + t_0 * l(B), \qquad l(B_2) = (l-t_0) * l(B)$$

berechnet.

Die Rechenschritte zur Auftrennung werden bei $n = 4$ zweckmäßigerweise nach dem folgenden Schema organisiert:

$$b_0: = a_0$$

$$b_1: = a_0 + t_0 * (a_1 - a_0)$$

$$b_2: = a_1 + t_0 * (a_2 - a_1)$$

$$c_2 : = a_2 - t_0 * (a_3 - a_2)$$

$$c_3 : = a_3 + t_0 * (a_4 - a_3)$$

$$c_4 : = a_4$$

$$c_1 : = b_2 + t_0 * (c_2 - b_2)$$

$$b_2 : = b_1 + t_0 * (b_2 - b_1)$$

$$c_2 : = c_2 + t_0 * (c_3 - c_2)$$

$$b_3 : = b_2 + t_0 * (c_1 - b_2)$$

$$c_1 : = c_1 + t_0 * (c_2 - c_1)$$

$$b_4 : = b_3 + t_0 * (c_1 - b_3)$$

$$c_0 := b_4$$

Zur Separierung der Nullstellen von $B(a_0, ..., a_4; t)$ verfährt man wie folgt: Nach Abtrennung eventueller auf dem Rand liegender Nullstellen sind beide Ordinaten $a_0$ und $a_4$ ungleich Null. Wenn sie verschiedene Vorzeichen besitzen, liegt im Parameterintervall $[s(B), s(B)+l(B)]$ der Ausgangsfunktion wenigstens eine, im allgemeinen Fall eine ungerade Anzahl von Nullstellen. Da aber bei den betrachteten Bezierfunktionen maximal zwei auftreten können, existiert genau eine. Diese ist bereits separiert und liegt zwischen den Schranken $s(B)$ und $s(B)+l(B)$.

Wenn $a_0$ und $a_4$ das gleiche Vorzeichen besitzen (etwa positiv sind), dann wird unterschieden.

Sind auch $a_1$, $a_2$ und $a_3$ größer Null, dann kann keine Nullstelle vorliegen, denn jeder Wert $B(t)$ liegt im Parameterintervall zwischen dem Maximum und dem Minimum aller $a_1$. (Analog schließt man bei ausnahmslos strikt negativen Ordinaten.)

Ist jedoch eine der Ordinaten $a_1$ bis $a_3$ kleiner oder gleich Null, kann die Bezierfunktion entweder keine oder 2 Nullstellen aufweisen. Dann ist $B(t)$ an der Stelle $t = 1/2$ aufzutrennen und jedes der beiden Segmente auf die beschriebene Weise zu untersuchen. Wenn dabei eine Bezierfunktion $B'(t)$ mit $l(B') < delta$ erreicht ist, ohne daß eine Aussage über ihre Nullstellen gemacht werden kann, so kann die Halbierung abgebrochen werden. Eventuell noch vorhandene Nullstellen können im Rahmen der Rechengenauigkeit als Doppelnullstelle betrachtet werden und haben für die Digitalisierung der

Ausgangskurve keine Bedeutung. Sie entsprechen einem Wendepunkt der nicht nach t differenzierten Funktionen $x(t)$, $y(t)$, $x(t)+y(t)$ bzw. $x(t)-y(t)$.

Nach der Separierung der Nullstelle(n) wird die sukzessive Halbierung des Parameterintervalls jeweils mit dem Bezier-Segment $B(a_0, ..., a_4, t)$ fortgesetzt, bei dem $a_0$ und $a_4$ verschiedene Vorzeichen besitzen, bis entweder $l(B) < delta$ (dann ist die gewünschte Genauigkeit erreicht) oder bis eine der folgenden Bedingungen erfüllt ist:

$$a_4 - a_3 >= a_3 - a_2 >= a_2 - a_1 >= a_1 - a_0 \qquad (A)$$

bzw.

$$a_4 - a_3 <= a_3 - a_2 <= a_2 - a_1 <= a_1 - a_0. \qquad (B)$$

Nach einer bekannten Eigenschaft der Bezierfunktionen ist dann die zweite Ableitung von $B(t)$ auf $[0, 1]$ bei (A) positiv (bei (B) negativ), die Funktion hat dort keinen Wendepunkt. Damit ist weiter gewährleistet, daß die eingetretene Monotonie der Ordinatendifferenzen auch bei folgenden Intervallteilungen erhalten bleibt.

Das Bezierpolygon von $B(a_0,..., a_4; t)$ mit den Eckpunkten

$$P_i = (i/4, a_i), (i = 0, ..., 4)$$

enthält in seiner konvexen Hülle stets den Graphen von $B(t)$. Unter den Voraussetzungen über die Ordinatendifferenzen liegt die konvexe Hülle der Eckpunkte vollständig bei (A) oberhalb (bei (B) unterhalb) des Bezierpolygons, daher gilt das auch für den Graphen von $B(t)$. Aufgrund dieser Eigenschaft kann zur schnellen Einschließung der Nullstelle übergegangen werden.

**zu 3.:** Die schnelle Einschließung der Nullstellen beruht auf einer Kombination des einfachen Sekantenverfahrens mit einem modifizierten Tangentenverfahren, die die Vorteile beider Verfahren koppelt. Sie verwendet, daß bei fortschreitender Verfeinerung des Intervalls die Seiten der Bezierpolygone den Graphen der Bezierfunktion sehr gut approximieren.

Im Fall A setzen wir ohne echte Einschränkung voraus, daß $a_0 < 0$ und $a_4 > 0$ gilt, dann ist $k$ durch $a_k <= 0$, $a_{k+1} > 0$ eindeutig bestimmt. Die Seite des Bezierpolygons zwischen $P_k$ und $P_{k+1}$ hat den Schnittpunkt

$$t_1 = \frac{k + a_k}{4 (a_k - a_{k+1})}$$

mit der t-Achse. Dieser Wert ist eine obere Schranke für die Nullstelle von $B(t)$, da der Graph von $B(t)$ oberhalb des Bezierpolygons liegt. Damit gilt $B(t_1) >= 0$. Nach dem Algorithmus von deCasteljau wird nun $B(t)$ an der Stelle $t = t_1$ aufgetrennt und das linke Segment $B_1(t)$ weiter betrachtet. Wenn $B_1(1) = 0$, dann ist die Nullstelle der Ausgangsfunktion gleich $s(B_1)+l(B_1)$, andernfalls berechnet man für $B_1(t) = B_1(b_0, ..., b_4; t)$ den Schnittpunkt

$$t_2 = b_0 / (b_0 - b_4)$$

der Verbindungsstrecke der Polygoneckpunkte $(0, b_0)$ und $(1, b_4)$ mit der t-Achse. Diese Strecke liegt oberhalb des Graphen von $B_1(t)$, daher ist $t_2$ eine untere Schranke für die Nullstelle von $B_1(t)$. Mit $t = t_2$ wird erneut eine Auftrennung von $B_1(t)$ ausgeführt, nach der das rechte Segment $B_2(t)$ weiterverwendet wird. In der Folge sind auf die beschriebene Weise jeweils ein Polygonseiten- und ein Sekantenschritt auszuführen, bis der Intervallängenparameter $l$ kleiner als die vorgegebene Schranke $delta$ wird. Dann ist $s(B)+l(B)'2$ ein geeigneter Näherungswert der gesuchten Nullsteile. Im Fall B setzen wir analog voraus, daß $a_0 < 0$ und $a_4 > 0$. Der Index $k$ wird durch $a_k <= 0$, $a_{k-1} > 0$ definiert. Als untere Schranke für die Nullstelle von $B(t)$. berechnet man

$$t_1 = \frac{k + a_k}{4\,(a_k - a_{k+1})}$$

da das Bezierpolygon oberhalb des Graphen von $B(t)$ liegt. $B(t)$ wird an der Stelle $t = t_1$ aufgetrennt, dann enthält das rechte Segment $B_2(t)$ die Nullstelle. Ist $B_2(0) = 0$, dann ist die Nullstelle der Ausgangsfunktion zu $s(B_2)$ ermittelt, wenn nicht, wird aus den Ordinaten $c_0$ und $c_4$ von $B_2(t)$ der Schnittpunkt der Sekante mit der t-Achse

$$t_2 = c_0 \,/\, (c_0 - c_4)$$

berechnet. Er liefert eine obere Schranke für die Nullstelle von $B_2(t)$, daher ist diese Bezierfunktion bei $t = t_2$ aufzutrennen und das linke Segment weiter zu zerlegen.

Auch hier sind nach dem beschriebenen Verfahren jeweils ein Polygonseitenund ein Sekantenschritt auszuführen, bis für den Längenparameter $1 < delta$ gilt. Dann ist $s(B)+l(B)/2$ ein geeigneter Näherungswert für die gesuchte Nullstelle.

**zu 4.**: Es existiert eine weitere Methode der sukzessiven Einschließung einer separierten Nullstelle einer Bezierfunktion $B(a_0,...,a_4{:}t)$. Dabei wird zur Teilung des Parameterintervalls nach dem Algorithmus von de Casteljau nicht die Intervallmitte verwendet, sondern die Nullstellen in *[0,1]* von passend gewählten quadratischen Bezierfunktionen $B_x(a_0, x, a_4; t)$. Diese Funktionen stimmen am Rand des Intervalls mit der vorgegebenen Bezierfunktion überein. Sie besitzen daher in *[0,1]* genau eine Nullstelle, und über den Parameter x kann man erreichen, daß für $t = 0$ oder $t = 1$ eine Berührung 2. Ordnung von B und $B_x$ auftritt ($B_x$ ist eine Schmiegungsparabel).

Die allgemeine Form der Nullstellen von $B_x$ lautet

$$t_1 = a_0 \,/\, (a_0 - x + sqrt\,(x^2 - a_0 a_4))\,,$$

$$t_2 = a_0 \,/\, (a_0 - x - sqrt\,(x^2 - a_0 a_4)).$$

Wenn $a_0 > 0$ , dann liegt $t_1$ in *[0,1]*, anderenfalls ist die Formel für $t_2$ zur Bestimmung des Intervallteilungspunktes zu wählen.

Für $x = 2\,a_1 - a_0$ erhält man die Schmiegungsparabel am linken Rand, für $x = 2\,a_3 - a_4$ erhält man die Schmiegungsparabel am rechten Rand. Die vorgeschlagene Methode der Einschließung der Nullstelle von $B(a_0, ..., a_4; t)$ mit $a_0 a_4 < 0$ besteht darin, daß eine Intervallteilung nach de Casteljau an der sich für $x = 2\,a_1 - a_0$ oder $x = 2\,a_3 - a_4$ ergebenden Nullstelle in *[0,1]* einer Schmiegungsparabel ausgeführt wird, die zwei Segmente $B_1(b_0, ..., b_4; t)$ und $B_2$ $(c_0, ..., c_4; t)$ liefert. Dabei werden wie im Punkt 2. beschrieben die Intervallparameter $s(B)$ und $l(B)$ mitgeführt. Ist $b_4 = c_0 = 0$, dann ist die gesuchte Nullstelle ermittelt. Anderenfalls gilt entweder $b_0 * b_4 < 0$, dann enthält das Segment $B_1$ die Nullstelle von B, oder $c_0 * c_4 < 0$, dann wird die Einschließung mit Segment $B_2$ fortgeführt. Die nächsten Intervallteilungsschritte werden im Wechsel mit der Nullstelle der jeweils anderen Schmiegungsparabel des Segmentes ausgeführt, dadurch erreicht man eine schnelle Einschließung der Nullstelle sowohl von oben als auch von unten. Das Verfahren endet wieder, wenn der Längenparameter eines Segmentes kleiner als die Fehlerschranke *delta* wird.

### 2. Ermittlung der impliziten Kurvengleichung f(x,y) = 0

Aus der parametrischen Darstellung *(x(t), y(t))* der Bezierkurve wird durch Elimination des Parameters $t$ eine implizite polynomiale Darstellung

$$f(x,y) = ax^3 + bx^2 y + cxy^2 + dy^3 + ex^2 + fxy + gy^2 + hx + iy + j = 0$$

hergestellt. Nach [J.Hoschek, D.Lasser: Grundlagen der geometrischen Datenverarbeitung, B.G.Teubner 1989] liefert die sogenannte Bezout-Resultante der Kurve eine Detenminantenform von *f*. Aus den dort angegebenen Formeln läßt sich die folgende Formel ableiten, die rechentechnisch günstiger ist.

Bezeichnet man die Kontrollpunkte der Bezierkurve $X(t)$ mit $X_i = (x_p\ y_j)$ *(0 < = i < = 3)*, die Gewichte an $X_1$

und $X_2$ mit $p$ und $q$, und führt die Determinanten

$$D_{ij} = r_i * r_j * \begin{vmatrix} 1 & x & y \\ 1 & x_i & y_i \\ 1 & x_j & y_j \end{vmatrix} \quad . \quad (0 <= i < j <= 3)$$

ein, wobei $r_0 = 1$, $r_1 = 3p$, $r_2 = 3q$, $r_3 = 1$, dann ist

$$f(x,y) = \begin{vmatrix} D_{23} & D_{13} & D_{03} \\ D_{13} & D_{12} + D_{03} & D_{02} \\ D_{03} & D_{02} & D_{01} \end{vmatrix} = 0$$

eine implizite Darstellung der Kurve $X(t)$.

Zur Berechnung der Polynomkoeffizienten von $f$ setzt man das Element in Zeile $m$ und Spalte $n$ dieser Determinante mit $u_{mn}x + v_{mn}y + w_{mn}$ an.

Dann gilt:

$$a = det(u_{mn}), \, d = det(v_{mn}), \, j = det(w_{mn}),$$

$$e = (f(1,0) + f(-1,0)) \, / \, 2 - j,$$

$$h = (f(1,0) - f(-1,0)) \, / \, 2 - a,$$

$$g = (f(0,1) + f(0,-1)) \, / \, 2 - j,$$

$$i = (f(0,1) - f(0,-1)) \, / \, 2 - d,$$

$$b = (f(1,1) + f(-1,1)) \, / \, 2 - f(0,1) - e,$$

$$c = (f(1,1) + f(1,-1)) \, / \, 2 - f(1,0) - g,$$

$$f = e + g + j - (f(1,-1) + f(-1,1)) \, / \, 2,$$

wobei

$$f(1,0) = det(w_{mn} + u_{mn}),$$

$$f(-1,0) = det(w_{mn} - u_{mn}),$$

$$f(0,1) = det(w_{mn} + v_{mn}),$$

$$f(0.-1) = det(w_{mn} - v_{mn}),$$

$$f(1,1) = det(w_{mn} + u_{mn} + v_{mn}),$$

$$f(1,-1) = det(w_{mn} + u_{mn} - v_{mn}),$$

$$f(-1,1) = det(w_{mn} - u_{mn} + v_{mn}).$$

### 3. Bestimmung der Parameterwerte einer Selbstüberschneidung der impliziten Kurve

Beim Generieren eines Oktantenbogens wird in einem Testpunkt $X_s$ anhand des Vorzeichens von $f(x_s, y_s)$ entschieden, welcher von zwei Rasterpunkten näher an der zu digitalisierenden Kurve liegt. Die Zuordnung zwischen Vorzeichen und zu wählendem Rasterpunkt kehrt sich jedoch um, wenn die Kurvenverfolgung einen Doppelpunkt der impliziten Kurve überschreitet (in eine Schlinge eintritt oder diese verläßt). Dieser Effekt tritt auch ein, wenn die vorgegebene Bezierkurve keinen Doppelpunkt aufweist, aber durch ihre Fortsetzung auf die ganze Ebene geschnitten wird. Deshalb können (für kubische Bezierkurven im Höchstfall zwei) zusätzliche Bogenteilungen erforderlich sein.

Die Parameterwerte der Teilungspunkte lassen sich wie folgt ermitteln: Es sei $M$ die 4x3-Matrix

$$\begin{pmatrix} 1 & x_0 & y_0 \\ 1 & x_1 & y_1 \\ 1 & x_2 & y_2 \\ 1 & x_3 & y_3 \end{pmatrix}$$

mit den Kontrollpunkten der

Bezierkurve. $D$, $(0 <= i <= 3)$ bezeichne die Determinante der aus $M$ durch Streichung der $i$-ten Zeile hervorgehenden Matrix, dividiert durch $r_1$, wobei $r_0 = 1$, $r_1 = 3p$, $r_2 = 3q$, $r_3 = 1$.

Setzt man

$$a_0 = \begin{vmatrix} D_1 & D_2 \\ D_2 & D_3 \end{vmatrix}, \qquad a_1 = \begin{vmatrix} D_0 & D_1 \\ D_2 & D_3 \end{vmatrix} / 2 \qquad \text{und} \quad a_2 = \begin{vmatrix} D_0 & D_1 \\ D_1 & D_2 \end{vmatrix},$$

dann werden die Parameterwerte der Selbstüberschneidung durch die Lösungen der quadratischen Gleichung in Bezierform

$$a_0 (1-t)^2 + 2a_1 t(1-t) + a_2 t^2 = 0$$

angegeben. Dabei sind nur die im Parameterintervall $[0,1]$ liegenden Nullstellen für eine zusätzliche Bogenteilung zu berücksichtigen.

Das Auftreten einer Doppelnullstelle dieser Gleichung im Intervall $[0,1]$ ist ein Hinweis auf eine Singularität der Bezierkurve (die Schlinge entartet zu einer Spitze). In einer Umgebung der Singularität ist das Verfahren der inkrementellen Digitalisierung nicht anwendbar. Wenn Bezierkurven von diesem Typ auftreten können, sind sie mittels des Algorithmus von de Casteljau so zu zerlegen, daß die kritische Umgebung der Singularität nach einem üblichen unkritischen Verfahren digitalisiert werden kann.

Zur Herleitung der quadratischen Gleichung noch einige Bemerkungen: In einem Doppelpunkt $(x_d, y_d)$ der impliziten Kurve gilt für die partiellen Ableitungen von $f$ sowohl $f_x(x_d, y_d) = 0$ als auch $f_y(x_d, y_d) = 0$. Ausgehend von dem in $x$ und $y$ kubischen Polynom $f$ sind $f_x$ und $f_y$ quadratische Polynome. Setzt man die rationalen kubischen Bezierfunktionen $x(t)$ und $y(t)$ in die Gleichungen

$$f_x(x,y) = 3ax^2 + 2bxy + cy^2 + 2ex + fy + h = 0,$$

$$f_y(x,y) = bx^2 + 2cxy + 3dy^2 + fx + 2gy + i = 0$$

ein und multipliziert beide mit dem Quadrat des gemeinsamen Nenners von $x(t)$ und $y(t)$, so erhält man zwei Gleichungen 6. Grades in $t$, $f_x(t) = 0$ und $f_y(t) = 0$, deren Koeffizienten von den Kontrollpunkten $X_t$ und den Gewichten $p$, $q$ der Bezierkurve abhängen. Beim Vorliegen eines Doppelpunktes gibt es zwei Parameterwerte $t_1$ und $t_2$, die beide Gleichungen erfüllen. Daher haben $f_x(t)$ und $f_y(t)$ einen quadratischen Faktor $(t - t_1)(t - t_2)$ gemeinsam. Die konkrete Form dieses Faktors wurde mit Hilfe eines Formelmanipulationssystems aus der Bezout-Resultante für die Bezierkurve abgeleitet.

### 4. Transformation eines Teilbogens in die Standardlage

Aus den Parameterwerten $t_a$ für den Anfangspunkt und $t_e$ für den Endpunkt eines Teübogens einer Bezierkurve werden über die Parametergleichung $X(t) = (x(t), y(t))$ die Koordinaten der Punkte $X_a = (x_a, y_a)$ und $X_e = (x_e, y_e)$ berechnet. Es sei jetzt vorausgesetzt, daß der Teilbogen vollständig in einem der 8 Oktanten liegt, daß also die Oktantenteilung ausgeführt wurde.

Die Standardlage eines Oktantenbogens ist dadurch gekennzeichnet, daß $x_e >= x_a$, $y_e >= y_a$ und $d_x = x_e - x_a >= d_y = y_e - y_a$. Liegt ein Oktantenbogen nicht in der Standardlage vor, so kann er durch eine oder mehrere der Transformationen Negation in x, Negation in y bzw. Vertauschung von x und y sowohl an den Punkten $X_a$ und $X_e$ als auch an der impliziten Kurvengleichung in die Standardlage überführt werden. Zweckmäßigerweise verwendet man für die Digitalisierung des Oktantenbogens eine lokale Kopie des Koeffizientenvektors $(a, ..., j)$ des Polynoms $f$, vermerkt die ausgeführten Transformationen in einer Variablen $bogentyp$, und führt die erforderlichen Transformationen in der nachstehenden Reihenfolge aus:

1. Wenn $x_a > x_e$, dann ist die Negation in x auszuführen. Dazu setzt man

$$x_a := -x_a,\ x_e := -x_e,$$

und negiert die Koeffizienten $a$, $c$, $f$ und $h$ (von $x^3$, $xy^2$, $xy$ und $x$, die x in ungerader Potenz enthalten) des Polynoms $f(x,y)$. Die übrigen Koeffizienten von $f$ bleiben unverändert. Die Negation in x ist in der Variablen $bogentyp$ zu kennzeichnen.

2. Wenn $y_a > y_e$, dann ist die Negation in y auszuführen. Dazu setzt man

$$y_a := -y_a,\ y_e := -y_e,$$

und negiert die Koeffizienten $b$, $d$, $f$ und $i$ (von $x^2y$, $y^3$, $xy$ und $y$, die y in ungerader Potenz enthalten) des Polynoms $f(x,y)$. Die übrigen Koeffizienten von $f$ bleiben unverändert. Die Negation in y ist in der Variablen $bogentyp$ zu kennzeichnen.

3. Wenn (für die eventuell transformierten Werte) $x_a + y_e > x_e + y_a$ gilt (d.h. $y_e - y_a > x_e - x_a$), sind x und y zu vertauschen. Dazu werden

$$x_a \longleftrightarrow y_a,\ x_e \longleftrightarrow y_e$$

ausgetauscht sowie $a \longleftrightarrow d$, $b \longleftrightarrow c$, $e \longleftrightarrow g$, $h \longleftrightarrow i$ (die Koeffizienten von $x^3$ und $y^3$, $x^2y$ und $xy^2$, $x^2$ und $y^2$, x und y, die x und y in ungleicher Potenz enthalten) des Polynoms $f(x,y)$. Die übrigen Koeffizienten von $f$ bleiben unverändert. Die Vertauschung von x und y ist in der Variablen $bogentyp$ zu kennzeichnen.

### 5. Digitalisierung eines Teilbogens in Standardlage

Es wird davon ausgegangen, daß der Anfangspunkt $X_a = (x_a, y_a)$ und der Endpunkt $X_e = (x_e, y_e)$ des exakten Kurvenbogens berechnet vorliegen. Das Vorzeichen des transformierten Polynoms $f$ sei so gewählt, daß für Punkte $(x, y)$ unterhalb des Bogens $f(x,y) > 0$ gilt.

Da die Fortschreitrichtung eines Standardbogens die x-Richtung mit wachsenden x-Werten ist, verläuft der digitalisierte Bogen zwischen den diskreten Abszissen $x_0 = ceil(x_a)$ und $x_1 = floor(x_e)$. (Die Funktionen $ceil(x)$ und $floor(x)$ bezeichnen die kleinste ganze Zahl größer oder gleich x bzw. die größte ganze Zahl kleiner oder gleich x). Durch die Oktantenteilung ist auf dem Intervall $[x_a, x_e]$ gewährleistet, daß der Anstieg des Bogens zwischen 0 und 1 einschließlich liegt. Die Ordinate des Kurvenpunktes zur Abszisse $x_0$ auf dem betrachteten Bogen liegt wegen $x_0 - x_a < 1$ zwischen $y_a$ und $y_a + 1$. Der zur Kurve nächste Rasterpunkt an der Abszisse $x_0$ liegt demnach zwischen

$$round(y_a) = floor(y_a + 0.5)$$

und

$$round(y_a + 1) = floor(y_a + 1.5).$$

Als Testpunkt für die Entscheidung über den der Kurve enger benachbarten Rasterpunkt, den Startpunkt des digitalen Bogens, wird daher

$$(x_0, floor(y_a + 0.5) + 0.5)$$

gewählt.

Ist $f( ceil(x_a), round(y_a) + 0.5 ) < 0,$ liegt der Testpunkt oberhalb des exakten Bogens, damit ist $y_0 = round(y_a)$ Ordinate des Startpunktes. Im anderen Fall ist $y_0 = round( y_a )+1$ als Ordinate des Startpunktes zu wählen. (Bei dieser Verfahrensweise kann es vorkommen, daß an den Oktantenteilungspunkten der Bezierkurve zum Anstieg +1 oder -1 durch die Bogenteilung ein Rasterpunkt der Digitalisierung ausgelassen wird. Das wird vermieden, indem man im Fall $y_0 - y_a > 1$ den Rasterpunkt $(x_0-1, y_0-1)$ vor dem Startpunkt hinzunimmt.)

Weitere Rasterpunkte werden im Prinzip durch die Wiederholung der Vorzeichenauswertung des Polynoms in fortlaufenden Testpunkten generiert. Ausgehend von einem bereits bestimmten Rasterpunkt $(x,y)$ der digitalen Approximation kommen als Kandidaten für den Rasterpunkt zur Abszisse $x+1$ nur die Ordinaten y oder $y+1$ in Frage. Der Mittelpunkt $(x+1, y+0.5)$ ist daher Testpunkt für die zu treffende Entscheidung über den Rasterpunkt mit minimalem Approximationsfehler.Die Anzahl der auszuführenden Schritte ergibt sich aus der Differenz $x_1-x_0$.Die Besonderheit des vorgeschlagenen Verfahrens besteht darin, daß die Auswertung des Polynoms $f$ in aufeinanderfolgenden Testpunkten inkrementell aus dem vorhergehenden Polynomwert und vorbereiteten Korrekturwerten erfolgt. Diese sind je nach der Art des Übergangs in den nächsten Testpunkt jeweils durch einige Additionen zu aktualisieren.

Es bezeichne $f_p$ den Zuwachs von $f(x,y)$ beim Übergang vom Testpunkt $(x,y)$ zum nächsten Testpunkt durch Inkrement in beiden Koordinatenrichtungen, also

$$f_p(x,y) = f(x-1,y+1) - f(x,y).$$

Dieser Übergang wird als p-Übergang bezeichnet.

Entsprechend bezeichne $f_m$ den Zuwachs von $f(x,y)$ beim Übergang vom Testpunkt $(x,y)$ zum nächsten Testpunkt durch Inkrement in der x-Richtung, also

$$f_m(x,y) = f(x+1,y) - f(x,y).$$

Dieser Übergang wird als m-Übergang bezeichnet.

Analog vereinbaren wir die Änderungen dieser und weiterer Zuwächse durch

$$f_p{}^*(x,y) = f^*(x+1,y+1) - f^*(x,y),$$

$$f_m{}^*(x,y) = f^*(x+1,y) - f^*(x,y),$$

wobei * eine endliche Folge von p- bzw. m-Übergängen bezeichnet.

Die Funktion $f_p{}^*$ gibt den Wert an, um den man den Funktionswert von $f^*$ bei einem p-Übergang korrigieren muß. Die Funktion $f_m{}^*$ gibt den Wert an, um den der Funktionswert von $f^*$ bei einem m-Übergang korrigiert werden muß.

Unmittelbares Ausrechnen liefert die Identitäten

$$f_{mp}(x,y) = f_{pm}(x,y)$$

und

$$f_{mmp}(x,y) = f_{mpm}(x,y) = f_{pmm}(x,y),$$

$$f_{mpp}(x,y) = f_{pmp}(x,y) = f_{ppm}(x,y)$$

für beliebige $x, y$. Darüber hinaus sind die Zuwächse dritter Ordnung des kubischen Polynoms $f$ konstant.

Somit müssen für die inkrementelle Auswertung von $f$ in den Testpunkten jeweils 10 Parameter berechnet werden - der Funktionswert $f$, die Korrekturen erster Ordnung $f_m$ und $f_p$, die Korrekturen zweiter Ordnung $f_{mm}$, $f_{pm}$ und $f_{pp}$ sowie die Korrekturen dritter Ordnung $f_{mmm}$, $f_{pmm}$, $f_{ppm}$ und $f_{ppp}$. Die letzeren 4 müssen als Konstante nur einmal pro Bogen bestimmt werden. Die übrigen 6 werden inkrementell je nach der getroffenen Vorzeichenentscheidung mit Hilfe ihrer bereits berechneten Zuwächse aktualisiert.

Bei einem p-Übergang sind folgende Additionen auszuführen

$$f := f + f_p ,$$

$$f_p := f_p + f_{pp} ,$$

$$f_m := f_m + f_{pm} ,$$

$$f_{pp} := f_{pp} + f_{ppp} ,$$

$$f_{pm} := f_{pm} + f_{ppm} ,$$

$$f_{mm} := f_{mm} + f_{pmm} .$$

Bei einem m-Übergang sind folgende Additionen auszuführen

$$f := f + f_m ,$$

$$f_p := f_p + f_{pm} ,$$

$$f_m := f_m + f_{mm} ,$$

$$f_{pp} := f_{pp} + f_{ppm} ,$$

$$f_{pm} := f_{pm} + f_{ppm} ,$$

$$f_{mm} := f_{mm} + f_{mmm} .$$

Die Formeln für die Anlaufrechnung im ersten Testpunkt $(x,y)$ lauten :

$f_m(x,y)$ und $f_p(x,y)$ werden am günstigsten mittels ihrer Definitionsgleichung berechnet.

$$f_{pp}\,(x,y) = (6a+4b+2c)\,x + (2b+4c+6d)\,y + 6(a+b+c+d)+ 2(e+f+g)\,,$$

$$f_{pm}\,(x,y) = (6a+2b)\,x - (2b+2c)\,y - 6a+3b+c + 2e+f\,,$$

$$f_{mm}\,(x,y) = 6a\,x - 2b\,y - 6a + 2e\,,$$

$$f_{ppp} = 6\,(a+b+c+d)\,,$$

$$f_{ppm} = 6a + 4b + 2c\,,$$

$$f_{pmm} = 6a + 2b\,,$$

$$f_{mmm} = 6a\,.$$

Alle Rechnungen sind im Gleitkommaformat mit erhöhter Genauigkeit durchzuführen, um die Auswirkungen von Rundungsfehlern zu begrenzen. Dabei kann trotz der geringeren Geschwindigkeit gegenüber dem Integer-Format eine hohe Generierungsrate der Rasterpunkte erreicht werden. Eine Implementierung des Verfahrens auf einem Transputer T800-20 benötigte pro Rasterpunkt 11 Mikrosekunden.

Bei einer Anwendung des vorgeschlagenen Verfahrens zur Kurvengenerierung in sehr hoher Auflösung ist das Problem der Akkumulation von Rundungsfehlern dadurch entschärft, daß die Zuwächse höherer Ordnung betragsmäßig sehr viel kleiner und damit absolut genauer sind als die Funktionswerte oder die Zuwächse niederer Ordnung. Wenn bei der Generierung sehr langer Bögen die geforderte Genauigkeit trotzdem durch akkumulierte Rundungsfehler beeinträchtigt wird, kann nach einer festen Anzahl erzeugter Punkte erneut eine Anlaufrechnung eingeschaltet werden.

### 6. Durchlauf durch die vollständige Bezierkurve

Für die Generierung eines Oktantenbogens in Standardlage wurde vorausgesetzt, daß $f_y(x_1,y_1) < 0$ an irgend einem innerem Punkt $(x_1,y_1)$des Bogens. Es soll nun anhand des Umlaufs um einen Vollkreis $f(x,y) = r^2 - x^2 - y^2 = 0$ betrachtet werden, welche Forderungen an die untransformierten Bogen in allen 8 Ausgangslagen zu stellen sind, damit nach der Transformation in die Standardlage diese Bedingung erfüllt ist. In diesem Beispiel ist die Voraussetzung für den 7. Oktanten (Standardlage) erfüllt.

Es ist zu berücksichtigen, daß die Negation in x $f_x$ in $-f_x$ überführt, die Negation in y überführt $f_y$ in $-f_y$ und die Vertauschung von x und y vertauscht $f_x$ mit $f_y$.

| Oktant | part. Ableitung orthogonal zur Fortschreitrichtung | Transformationen | | transformiert in Standardlage | | |
|---|---|---|---|---|---|---|
| | | x->-x | \| y->-y \| | x <-> y | | |
| 1 | $f_x<0$ | | + | + | | $f_y<0$ |
| 2 | $f_x<0$ | + | + | + | | $f_y>0$ |
| 3 | $f_y>0$ | + | + | | | $f_y<0$ |
| 4 | $f_y>0$ | + | | | | $f_y>0$ |
| 5 | $f_x>0$ | + | | | + | $f_y<0$ |
| 6 | $f_x>0$ | | | | + | $f_y>0$ |
| 7 | $f_y<0$ | | | | | $f_y<0$ |
| 8 | $f_y<0$ | | + | | | $f_y>0$ |
| (vgl. Abb. 2) | | | | | | |

Aus dieser Tabelle ist abzulesen, daß für den ersten Bogen der Kurvengenerierung in irgend einem innerem Punkt des Bogens zu bestimmen ist

(Regel 1)

das Vorzeichen von $f_x$, falls er im Oktanten 1, 2, 5 oder 6 liegt,

das Vorzeichen von $f_y$, falls er im Oktanten 3, 4, 7 oder 8 liegt.

Um nach der Transformation in die Standardlage $f_y < 0$ zu erreichen, muß das Vorzeichen des Polynoms $f$ so gewählt werden, daß die partielle Ableitung orthogonal zur Fortschreitrichtung auf dem ersten Bogen

(Regel 2)

kleiner 0 ist für die Oktanten 1, 4, 6 oder 7,

größer 0 ist für die Oktanten 2, 3, 5 oder 8.

Weiter geht aus dieser Tabelle hervor, daß bei einem Durchlauf durch die vollständige Bezierkurve in jedem Oktantenteilungspunkt mit Übergang zum benachbarten Oktanten (entsprechend dem Vollkreis) das Vorzeichen des Polynoms $f$ zu invertieren ist. Das gleiche gilt beim Durchlauf durch einen Teilungspunkt, der einem Doppelpunkt der impliziten Kurve entspricht. Damit entfällt die Notwendigkeit, für den zweiten und weitere Bögen der Bezierkurve das Vorzeichen der partiellen Ableitung orthogonal zur Fortschreitrichtung zu errechnen.

Damit läßt sich die Generierung der vollständigen Bezierkurve wie folgt beschreiben. Die t-Parameter der Bogenteilungspunkte sind in eine aufsteigende Folge

$$0 = t_0 < t_1 < ... < t_n = 1$$

zu sortieren. Für $t_0$ und $t_n$ sind die Kurvenpunkte als vorgegebene Kontrollpunkte bereits bekannt, zu den restlichen sind die Punkte $(x(t_k), y(t_k))$ zu errechnen. Der Koeffizientenvektor des Polynoms $f$ wird einmal gemäß der Bezout-Resultante und einmal mit negierten Elementen $(-f)$ abgespeichert. In einem inneren Punkt des ersten Bogens über $[0, t_1]$ bestimmt man nach Regel 1 das Vorzeichen einer partiellen Ableitung von $f$. Wenn es Regel 2 genügt, wird als lokale Kopie des Koeffizientenvektors $f$ an die Bogengenerierung übergeben, anderenfalls der Vektor von $-f$. In der Folge ist bei jedem anschließenden Bogen der alternierende Koeffizientenvektor zu wählen.

Die mit der Erfindung erzielten Vorteile bestehen insbesondere darin, daß abbildende Verfahren mit sehr hohen Genauigkeitsanforderungen , die aus Gründen der Zeitabhängigkeit der Genauigkeit auf kurze Prozeßzeiten angewiesen sind, mit dem erfindungsgemäßen Verfahren realisiert werden können, da mit dem Verfahren auch bei komplexen Geometrien die Koordinatengenerierung in Echtzeit erreichbar ist. Durch die kurzen Prozeßzeiten erhöht sich die Produktivität der mit diesem Verfahren arbeitenden Anwendungen (z.B. Laserbelichter (Drucker, Plotter etc.), Mikrolithografie mit Elektronen- oder Röntgenstrahlen, Mikrosystemtechnik, binäre und integrierte Optik, Herstellung von Lichtwellenleitern, 2-D-Robotersteuerungen, Drucktechnik und die Visualisierung von Entwurfsdaten). Bei den Anwendungen, die wegen der über einen längeren Zeitraum schwierig aufrechterhaltbaren Prozesse bisher nur mit erhöhten Ausschußraten betrieben werden konnten, ist wegen der deutlich kürzeren Prozeßzeiten eine Qualitätssteigung und Verringerung der Ausschußrate zu realisieren. Zeitaufwendige Datenvorbereitungsprozesse zur Umwandlung der kompakten Geometriedaten in hochaufgelöste Steuerdaten (offline - Compilierung) können entfallen, es entstehen daher keine Zwischendateien mit Massendatencharakter, die umfangreichen Speichermedien und schnelle Transferkanäle hin zur Steuereinrichtung erfordern würden.

**Patentansprüche**

**1.** Verfahren zur Generierung von ebenen technischen Kurven oder Konturen in einem technischen Gerät, welches die Ansteuerung von Punkten in einem quadratischen Raster ermöglicht, **dadurch gekennzeichnet, daß** zur Digitalisierung parametrischer, rationaler oder polynomialer kubischer Bezierkurven der Form

$$X(t) = \frac{X_0\,(1-t)^3 + 3\,p\,X_1\,t(1-t)^2 + 3\,q\,X_2\,t^2\,(1-t) + X_3\,t^3}{(1-t)^3 - 3\,p\,t(1-t)^2 - 3\,q\,t^2\,(1-t) + t^3} \quad (0 <= t <= 1)$$

mit den Kontrollpunkten $\quad X_i = (x_i, y_i)\ (0 <= i <= 3)$,

den Gewichten $\quad p,\ q > 0$,

und dem Parameter $\quad t$ mit $0 <= t <= 1$

diese in Oktantenbögen, die getrennt erzeugt werden, zerlegt werden, derart, daß die Grenzen der Oktantenbögen durch die Parameter t an den Punkten der Kurve bestimmt werden, wo diese den Anstieg 0, $\infty$, 1 oder -1 aufweist, daß anschließend die Kurven zur Befreiung von der Parametrisierung in eine implizite Form f(x, y) = 0 transformiert werden, daß eine zusätzliche Kurventeilung der Bezierkurve an den Stellen erfolgt, an denen f(x, y) = 0 eine Selbstüberschneidung besitzt und danach eine Bestimmung der Koordinaten aller Teilungspunkte aus den entsprechenden Parameterwerten erfolgt, wobei die Teilungspunkte zusammen mit den Anfangs- und Endpunkten der ursprünglichen Kurve die Anfangs- und Endpunkte aller Einzelbögen bilden, daß alle diese Bögen durch Spiegelungen an einer oder mehreren der drei Achsen x = 0, y = 0 oder x = y in die Standardlage gebracht werden, die dadurch bestimmt ist, dass der Richtungsvektor (dx,dy) vom Anfangspunkt eines Bogens zu dessen Endpunkt Komponenten dx $> = 0$ und dy $> = 0$ besitzt sowie dass dx $> = $ dy gilt daß die Generierung der digitalen Approximation mit der Bestimmung des zum Startpunkt des Bogens benachbarten Rasterpunktes $(x_o, y_0)$ beginnt, wobei durch die Oktantenteilung und die Spiegelungen gesichert ist, daß der Anstieg des Bogens stets zwischen 0 und 1 liegt, daß anschließend die Berechnung der Funktion $f(x_o + 1, y_o + \frac{1}{2})$ erfolgt, wobei diese Berechnung und die Auswertung des Vorzeichens von f im Testpunkt $(x_o + 1, y_o + \frac{1}{2})$ die Entscheidung ermöglicht, zwischen welchem, der Rasterpunkte $(x_0+1,y_0)$ bzw. $(x_0+1,y_0+1)$ und dem Testpunkt der Bogen verläuft und daß anschließend dieser Rasterpunkt den Ausgangspunkt für den nächsten Schritt bis zum Erreichen des Endpunktes des Bogens bildet, und das technische Gerät die so erzeugten Rasterpunkte ansteuert.

2. Verfahren nach Anspruch 1, **dadurch gekennzeichnet, daß** die Parameterwerte *t* zur Oktantenteilung dadurch ermittelt werden, daß

   - ein Polynom, dessen Nullstellen im Intervall *[0, 1]* den Parameterwerten entsprechen, als Bezierfunktion 4. Grades formelmäßig dargestellt wird,
   - die Konstruktion von abgeleiteten Bezierfunktionen über eingeschränkten Intervallen, die auf Nullstellen untersucht werden, nach dem Algorithmus von de Casteljau erfolgt,
   - die Nullstellen zuerst durch sukzessive Intervallhalbierung separiert werden,
   - die Einschließung einer Nullstelle durch garantierte obere und untere Schranken mit einer vorgegebenen Genauigkeit zunächst durch sukzessive Intervallhalbierung erfolgt,
   - dabei das Kontrollpolygon einer abgeleiteten Bezierfunktion über dem Einschließungsintervall schnell auf Konvexität getestet wird,
   - bei Erfüllung des Tests die Nullstelle im Wechsel durch die Schnittpunkte der Parameterachse mit dem Kontrollpolygon bzw. mit der Sekante des Graphen einer abgeleiteten Bezierfunktion über dem Einschließungsintervall immer enger eingeschlossen wird.

3. Verfahren nach Anspruch 1, **dadurch gekennzeichnet, daß** die Parameterwerte *t* zur Oktantenteilung dadurch ermittelt werden, daß

   - ein Polynom, dessen Nullstellen im Intervall *[0, 1]* den Parameterwerten entsprechen, als Bezierfunktion 4. Grades formelmäßig dargestellt wird,
   - die Konstruktion von abgeleiteten Bezierfunktionen über eingeschränkten Intervallen, die auf Nullstellen untersucht werden, nach dem Algorithmus von de Casteljau erfolgt,
   - die Nullstellen zuerst durch sukzessive Intervallhalbierung separiert werden,
   - die Einschließung einer separierten Nullstelle durch garantierte obere und untere Schranken bis zur vorgegebenen Genauigkeit im Wechsel durch die Nullstelle einer Schmiegungsparabel der abgeleiteten Bezierfunktion am rechten bzw. linken Rand des Einschließungsintervalls erfolgt, wobei jede Schmiegungsparabel mit der Bezierfunktion an beiden Intervallenden übereinstimmt.

4. Verfahren nach den Ansprüchen 1 bis 3 **dadurch gekennzeichnet, daß**

   - die implizite Darstellung der Bezierkurve durch ein Polynom *f(x, y)* aus einer Detenminantenform der Bezout-Resultante gewonnen wird, deren Elemente formelmäßig direkt aus den Kontrollpunkten und Gewichten der Bezierkurve berechnet werden,
   - die Koeffizienten des Polynoms *f(x, y)* durch die Berechnung der Polynomwerte in 7 Punkten *(x, y)* und die Auswertung von 10 dreireihigen Determinanten erfolgt, aus denen lediglich einfache Linearkombinationen zu bilden sind,
   - die Parameterwerte einer Selbstüberschneidung der Bezierkurve als Lösungen einer quadratischen Gleichung bestimmt werden, deren Koeffizienten in der Bezierform formelmäßig aus den Kontrollpunkten und Gewichten der Bezierkurve dargestellt sind.

**Claims**

1.  Method for generating plane technical curves or contours in a technical device which makes it possible to execute points in a square grid, **characterised in that** in order to digitise parametric, rational or polynomial cubic Bézier curves of the form

$$X(t) = \frac{X_0(1\text{-}t)^3 + 3pX_1t(1\text{-}t)^2 + 3qX_2t^2(1\text{-}t) + X_3t^3}{(1\text{-}t)^3 - pt(1\text{-}t)^2 + 3qt^2(1\text{-}t) + t^3} \quad (0 <= t <= 1)$$

with the control points $X_i = (x_i, y_i)$ $(0 <= i <= 3)$,
the weights $p, q > 0$,
and the parameter $t$ with $(0 <= t <= 1)$,
they are decomposed into separately generated octant arcs, such that the boundaries of the octant arcs are determined by the parameter t at the points of the curve where it has the slope 0, ∞, 1 or -1, **in that** the curves are subsequently transformed into an implicit form f(x, y) = 0 in order to free them from the parameterisation, **in that** an additional curve division of the Bézier curve is carried out at the places where f(x, y) = 0 intersects itself and the coordinates of all the dividing points are subsequently determined from the corresponding parameter values, the dividing points together with the start and end points of the original curve forming the start and end points of all the individual arcs, **in that** all these arcs are brought by reflections through one or more of the three axes x = 0, y = 0 or x = y into the standard position, which is determined in such a way that the direction vector (dx, dy) from the start point of an arc to its end point has components dx > 0 and dy > 0 and dx >= dy is satisfied, **in that** the generation of the digital approximation begins with determination of the grid point $(x_0, y_0)$ adjacent to the start point of the arc, the octant division and the reflections ensuring that the slope of the arc always lies between 0 and 1, **in that** the function $f(x_0+1, y_0+½)$ is subsequently calculated, this calculation and the evaluation of the sign of f at the test point $(x_0+1, y_0+½)$ making it possible to decide between which of the grid points $(x_0+1, y_0)$ or $(x_0+1, y_0+1)$ and the test point the arc passes, and **in that** this grid point subsequently forms the starting point for the next step until the end point of the arc is reached, and the technical device executes the grid points generated in this way.

2.  Method according to Claim 1, **characterised in that** the parameter values t for the octant division are determined by

    *   formally representing a polynomial, the zeros of which in the interval *[0, 1]* correspond to the parameter values, as a 4th degree Bézier function,
    *   constructing derived Bézier functions over restricted intervals, which are checked for zeros, according to de Casteljau's algorithm,
    *   initially separating the zeros by successive interval halving,
    *   firstly including a zero by guaranteed upper and lower bounds with a predetermined accuracy by successive interval halving,
    *   then rapidly testing the control polygon of a derived Bézier function for convexity over the inclusion interval,
    *   if the test is positive, including the zeros ever more narrowly over the inclusion interval by the intersection points of the parameter axis alternately with the control polygon and with the secant of the graph of a derived Bézier function.

3.  Method according to Claim 1, **characterised in that** the parameter values t for the octant division are determined by

    *   formally representing a polynomial, the zeros of which in the interval *[0, 1]* correspond to the parameter values, as a 4th degree Bézier function,
    *   constructing derived Bézier functions over restricted intervals, which are checked for zeros, according to de Casteljau's algorithm,
    *   initially separating the zeros by successive interval halving,
    *   including a separated zero by guaranteed upper and lower bounds up to a predetermined accuracy by the zero of an osculating parabola of the derived Bézier function alternately on the left-hand and right-hand edges of the inclusion interval, each osculating parabola coinciding with the Bézier functions at the two interval ends.

4.  Method according to Claims 1 to 3, **characterised in that**

    *   the implicit representation of the Bézier curve by a polynomial *f(x, y)* is obtained from a determinant form of the Bezout resultant, the elements of which are formally calculated directly from the control points and weights of the Bézier curve,

- the coefficients of the polynomial *f(x, y)* are found by calculating the polynomial values at 7 points *(x, y)* and evaluating 10 determinants with three rows each, from which only simple linear combinations may be formed,
- the parameter values of a self-intersection of the Bézier curve are determined as solutions of a quadratic equation, the coefficients of which in the Bézier form are formally represented from the control points and weights of the Bézier curve.


**Revendications**

1. Procédé de génération de courbes ou de contours techniques plans dans un appareil technique qui permet de se diriger vers des noeuds d'une grille quadratique, **caractérisé par le fait que** pour la numérisation de courbes de Bézier cubiques paramétriques, rationnelles ou polynomiales de la forme

$$X(t) = \frac{X_0(1\text{-}t)^3 + 3\,p\,X_1\,t(1\text{-}t)^2 + 3\,q\,X_2\,t^2\,(1\text{-}t) + X_3\,t^3}{(1\text{-}t)^3 - 3\,p\,t(1\text{-}t)^2 + 3\,q\,t^2\,(1\text{-}t) + t^3} \quad (0 \leq t \leq 1)$$

avec les points de contrôle $\quad X_i = (x_i, y_i)\ (0 \leq i \leq 3)$
les poids $\quad p, q > 0$
et le paramètre $\quad t\ avec\ 0 \leq t \leq 1,$
celles-ci sont décomposées en arcs d'octants produits séparément de façon telle que les limites des arcs d'octants soient déterminées par les paramètres t aux points de la courbe où celle-ci présente la pente 0, ∞, 1 ou -1, qu'ensuite, les courbes sont mises sous une forme implicite f(x, y) = 0 pour être débarrassées de la paramétrisation, qu'une division supplémentaire de la courbe de Bézier aux endroits où f(x, y) = 0 possède un recoupement et ensuite a lieu une détermination des coordonnées de tous les points de division à partir des valeurs correspondantes du paramètre, les points de division formant avec l'origine et l'extrémité de la courbe initiale les origines et les extrémités de tous les arcs, que tous ces arcs sont mis par réflexions sur un ou plusieurs des trois axes x = 0, y = 0 et x = y dans la position standard qui est déterminée **par le fait que** le vecteur direction (dx, dy) de l'origine à l'extrémité d'un arc possède des composantes dx ≥0 et dy ≥0 et que dx ≥dy, que la génération de l'approximation numérique commence par la détermination du noeud $(x_o, y_o)$ de la grille voisin du point de départ de l'arc, la division en octants et la division assurant que la pente de l'arc soit toujours comprise entre 0 et 1, qu'ensuite a lieu le calcul de la fonction $f(x_o + 1, y_o + \frac{1}{2})$, ce calcul et l'évaluation du signe de f au point de test $(x_o + 1, y_o + \frac{1}{2})$ permettant de déterminer entre lequel des noeuds $(x_o + 1, y_o)$ et $(x_o + 1, y_o + 1)$ de la grille et le point de test s'étend l'arc, et qu'ensuite, ce noeud de la grille forme le point de départ de l'étape suivante jusqu'à ce que soit atteinte l'extrémité de l'arc, et l'appareil technique se dirige vers les noeuds de la grille ainsi produits.

2. Procédé selon la revendication 1, **caractérisé par le fait que** pour la détermination des valeurs du paramètre t pour la division en arcs d'octants,

   - un polynôme dont les zéros dans l'intervalle *[0, 1]* correspondent aux valeurs du paramètre est représenté en formule sous la forme d'une fonction de Bézier du 4ème degré,
   - la construction de fonctions de Bézier dérivées dans des intervalles restreints où sont recherchés les zéros est effectuée suivant l'algorithme de de Casteljau,
   - les zéros sont d'abord séparés par dichotomie des intervalles,
   - l'encadrement d'un zéro par des bornes supérieure et inférieure garanties est d'abord effectué avec une précision fixée par dichotomie des intervalles,
   - la convexité du polygone de contrôle d'une fonction de Bézier dérivée dans l'intervalle d'encadrement est alors rapidement contrôlée,
   - en cas de résultat positif du contrôle, le zéro est encadré de plus en plus étroitement alternativement par les points d'intersection de l'axe des paramètres avec le polygone de contrôle et avec la sécante du graphe d'une fonction de Bézier dérivée dans l'intervalle d'encadrement.

3. Procédé selon la revendication 1, **caractérisé par le fait que** pour la détermination des valeurs du paramètre t pour la division en arcs d'octants,

   - un polynôme dont les zéros dans l'intervalle *[0, 1]* correspondent aux valeurs du paramètre est représenté en formule sous la forme d'une fonction de Bézier du 4ème degré,

- la construction de fonctions de Bézier dérivées dans des intervalles restreints où sont recherchés les zéros est effectuée suivant l'algorithme de de Casteljau,
- les zéros sont d'abord séparés par dichotomie des intervalles,
- l'encadrement d'un zéro séparé par des bornes supérieure et inférieure garanties est effectué jusqu'à la précision fixée alternativement par le zéro d'une parabole osculatrice de la fonction de Bézier dérivée sur le bord droit et le bord gauche de l'intervalle d'encadrement, chaque parabole osculatrice concordant avec la fonction de Bézier aux deux extrémités de l'intervalle.

4. Procédé selon les revendications 1 à 3, **caractérisé par le fait que**

- la représentation implicite de la courbe de Bézier par un polynôme $f(x, y)$ est obtenue à partir d'une forme de déterminant de la résultante de Bezout dont les éléments sont calculés en formule directement à partir des points de contrôle et des poids de la courbe de Bézier,
- les coefficients du polynôme $f(x, y)$ sont déterminés par calcul des valeurs du polynôme en 7 points $(x, y)$ et évaluation de 10 déterminants à trois rangs à partir desquels seront formées seulement des combinaisons linéaires simples,
- les valeurs du paramètre d'un recoupement de la courbe de Bézier sont déterminées sous forme de solutions d'une équation du second degré dont les coefficients sont représentés en formule sous la forme de Bézier à partir des points de contrôle et des poids de la courbe de Bézier.

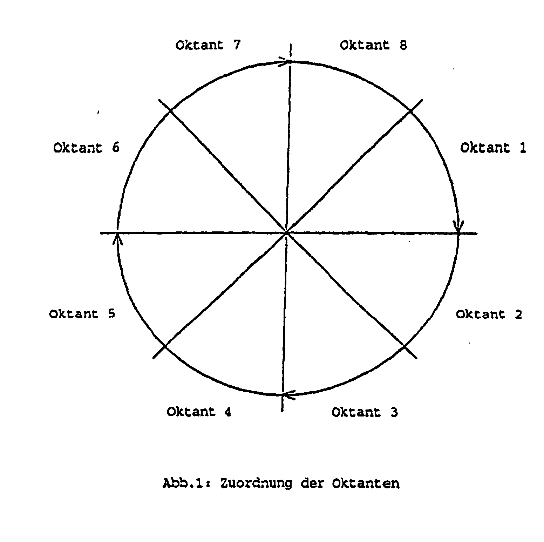

Abb.1: Zuordnung der Oktanten

$f_y < 0$

$f < 0$

$f_x > 0$

$f > 0$

$f_x < 0$

$f < 0$

$f > 0$

$f_y > 0$

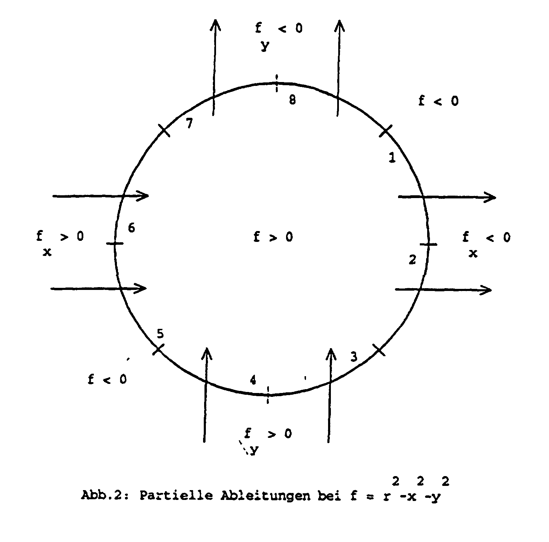

Abb.2: Partielle Ableitungen bei $f = r^2 - x^2 - y^2$